# EUROPEAN PATENT SPECIFICATION

(11) **EP 1 621 987 B1**
(45) Date of publication and mention of the grant of the patent: **03.07.2013**
(21) Application number: 05106883.1
(22) Date of filing: 26.07.2005
(51) Int. Cl.: G06F 3/033

(54) **Multifunction user interface device for a vehicle**
Multifunktionale Benutzerschnittstellenvorrichtung für ein Fahrzeug.
Dispositif d'interface utilisateur multifonctionnel pour véhicule automobile

(30) Priority: 27.07.2004 IT TO20040521
(43) Date of publication of application: 01.02.2006
(73) Proprietor: ELASIS - Società Consortile per Azioni, 80038 Pomigliano d'Arco (IT)
(72) Inventor: Masciocco, Vincenzo, 71100 Foggia (IT); Montemurro, Umberto, 80055 Portici (IT); Oliviero, Giuseppe, 80055 Portici (IT)
(74) Representative: Bergadano, Mirko

(56) References cited:
- WO-A-00/25258
- US-A1- 2002 021 286
- US-B1- 6 281 883
- US-B1- 6 300 941
- PATENT ABSTRACTS OF JAPAN vol. 2000, no. 26, 1 July 2002 (2002-07-01) & JP 2001 239897 A (TOSHIBA CORP), 4 September 2001 (2001-09-04)

## Description

The present invention relates to a multifunctional user interface for a motor vehicle.

As it is known, the user interface is often the main criterion used to repute a computerised system.

A user interface which is difficult to use necessarily leads to a high rate of errors by users contributing, in extreme cases, to the relinquishment of the computerised system regardless of the services and functions offered by the system itself.

The research conducted during the last decades on user interfaces has considerably raised the quality of human-computer interaction.

In the past, indeed, the human-computer dialogue revolved on the computer, forcing users to learn and use complex and often cryptic codes.

Recently, the situation has considerably improved as, in new systems, the interaction is focused on the human, thus allowing the use of computerised tools also by users with little or no knowledge of the system internal structure.

For example, US-B1-6 281 883 discloses a hand-held data entry controller which includes a chassis having a handle portion which is shaped to fit in the user's hand, and a cursor controller, such as a track ball, attached to the chassis for providing a signal representative of a desired cursor position on a display screen. The data entry device also include at least one command button for providing a command signal representative of a desired command. The data entry device may also include a microphone attached to the chassis for providing an acoustic speech signal representative of a user's speech. The device can also include a voice command button, attached to the chassis, for providing, in response to a user's input, a command signal indicating whether the acoustic speech signal represents a spoken command.

The above is particularly relevant in the automotive field as the user interface that allows the dialogue between the vehicle occupants and the on-board computerised system is a critical element in vehicle engineering.

As known, computerised systems allowing the management of a high number of functions are used aboard vehicles.

Among the various main functions of such systems, we can point out:
assisted navigation
audio/video system management
mobile communications
access to computerised services in general, such as e-mail management or information exchange management with one or more service centres; and
summary/processing of information related to vehicle travel (e.g. fuel consumption, kilometres travelled, etc.).

Currently, the development of effective human-computer interfaces in the automotive field for the management of such functions is one of the priorities of the automotive industry itself.

With regard to this, the known American organisation NTSC has pointed out at that "the country which will develop and implement an architecture capable of providing to the driver a coherent interface will dominate the automotive industry for many years to come".

Considering the increasing use of ever more complete and complex computerised systems, it is easy to foresee that availing of increasingly more effective and complete human-computer interfaces will be necessary to manage an increasingly higher number of functions.

Already today, the management of such functions presents not few difficulties.

This is easily noticeable by analysing the considerable number of different user interface solutions presented by different manufacturers. Such a situation is reminiscent of the one which occurred in the computer field at the end of the 70's when one witnessed a proliferation of innovative, non standardised graphic interfaces. The current state of the art shows that an interface standard that is accepted by a vast number of users has not yet been defined.

Moreover, the usable interfaces in the automotive field present a specific problem that is due to the limited quantity of attention that the user can devote to using the interface as the user is mainly dedicated to driving the vehicle.

For example, in a car, it is not reasonably possible to use mouse like interfaces in which a pointer is moved on a graphic interface according to the commands of a mouse; such an interface would excessively distract the vehicle driver.

It is an object of the present invention to provide a user-friendly multi-functional user interface device for a motor vehicle which is simple to use and

which reduces to the minimum the mental effort required by the user to use the interface itself (non-distracting interface).

The foregoing object is reached by the present invention in that it relates to computerized system and a multifunctional user interface device for a motor vehicle as defined in the appended claims.

The invention will now be illustrated with reference to the accompanying drawings which represent a non-limitative preferred form of embodiment in which:
Figure 1 shows, in a top view, an interface device carried out according to the dictates of the present invention;
Figure 2 shows a side view of the interface device shown in Figure 1;
Figures 3, 4 and 5 show the grasped interface device; and
Figures 6 and 7 show graphic representations provided from a graphic interface operating with the interface device.

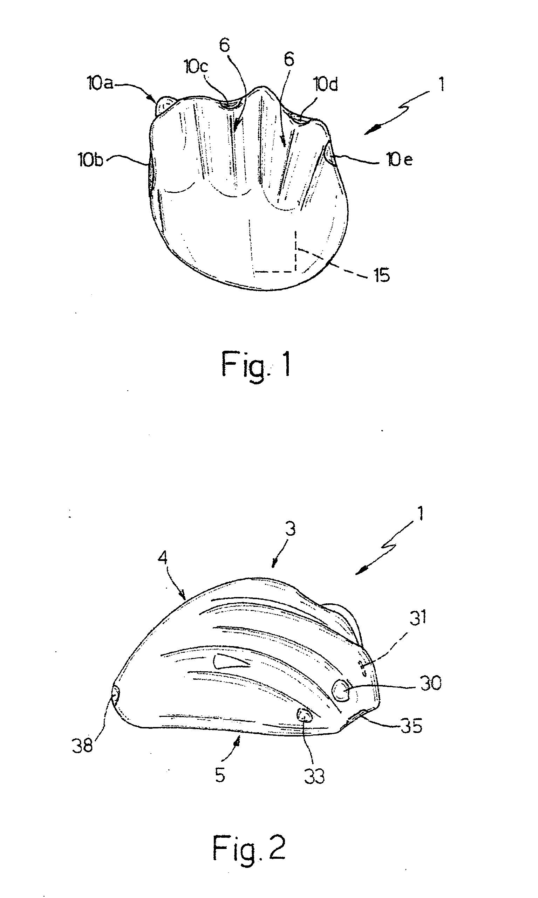

In Figures 1 and 2, numeral 1, as a whole, indicates a multifunctional user interface for a motor vehicle.

Interface device 1 comprises an external casing 3, of ergonomically graspable shape, comprising an upper arched portion 4 and a noticeably flat lower portion 5.

The upper arched portion 4 presents on its external surface a plurality of lowered and elongated seats 6 each adapted to carry out a portion's housing of a finger of an user who is grasping the casing 3. At an end portion of each lowered seat 6 is arranged a control organ 10 operable by a respective finger of the hand. In particular, in the illustrated embodiment exemple, there are provided five control organs and in particular:
a rolling control organ 10a operable with the hand index finger; and
four buttons 10b, 10c, 10d and 10e operable with the other fingers of the hand.

Preferably, the rolling control organ 10a is of the scroll ball type, which can pivot about two mutually orthogonal axes X and/or Y to carry out respective control signals Sx(t) and Sy(t), and is also clickable, that is mobile between a stable home position and an unstable activation position, to carry out a third control signal Sd(t).

Furthermore, the rolling control organ 10a can pivot about X and Y either continuously or discreetly, that is in sequential angular steps.

As an alternative to the above description, the rolling control organ 10a can comprise a more simple and cost-effective scroll wheel, angularly mobile about one only axis X to generate a control signal Sx(t) and clickable, that is mobile between a stable home position and an unstable activation position, to carry out an additional control signal Sd(t).

Using the scroll wheel, capable of providing one only degree of freedom, obviously makes the access to some applications more complex, but all the same allows the operability of the interface device 1.

The interface 1 is internally provided with a circuit 15 which translates the signals deriving from operating the various control organs 10 into control signals which are transmitted by means of a two-way wireless transmission system (e.g. of the Bluetooth™ type) to a computerised system 17 arranged aboard the vehicle.

The computerised system 17 is provided with a graphic interface 20 and manages a high number of functions.

The control signals generated by the interface 1 are used to control the on-board computerised system 17 through the graphic interface 20.

Among the various functions implemented by the computerised system 17, we can point out by way of example:
assisted navigation,
audio/video system management,
mobile communications,
access to computerised services in general, such as e-mail management or information exchange management with one or more service centres, and
summary/processing of information related to vehicle travel (e.g. fuel consumption, kilometres travelled, etc.).

The Bluetooth™ type connection guarantees a bandwidth which allows the transfer of control signals and - additionally - of audio flows.

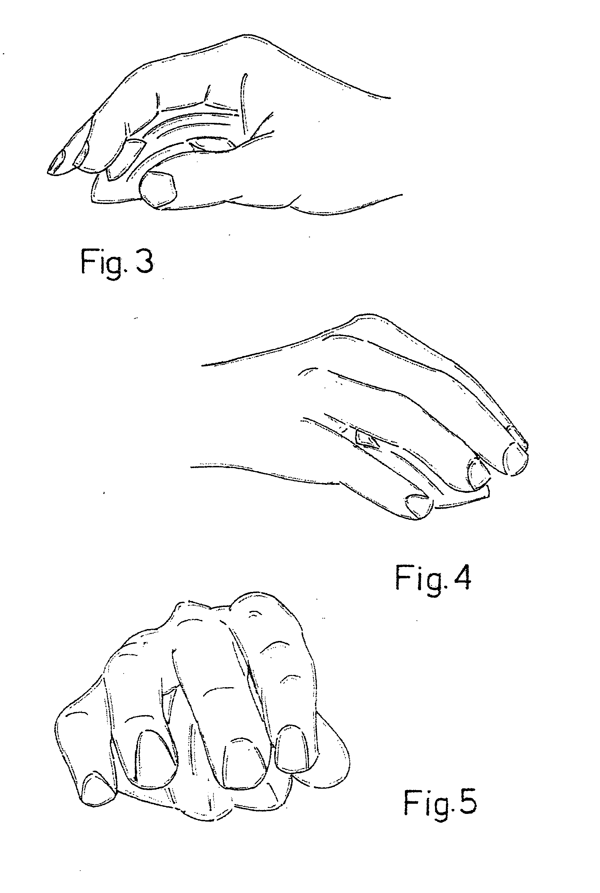

According to the invention, the user is grasping the external casing (Figures 3, 4 and 5) in a "guided" way as the various fingers of the hand are guided, during the operations of the hand arrangement on the casing 3, within respective seats such that the tip of each finger is arranged facing a respective control organ 10. The use of the interface is thus facilitated and the "automatic" arrangement of the various fingers reduces the risks of distraction by the driver.

The use of the interface device 1 with all buttons positioned at the fingers considerably reduces the user's task with respect to most of the currently marketed solutions.

Indeed, it is eliminated the highly distracting and potentially dangerous phase of "searching" and identifying the button to be selected which occurs in the traditional system provided, for example, with buttons arranged on a display.

In this manner, by resting the hand on the casing 3, the scroll ball 10a is arranged exactly under the index finger, while the four buttons 10b-10e are positioned under the other four fingers.

The use of the index finger to control the scroll ball is of immediate comprehension by all users accustomed to using a computer and, therefore, does not require any learning, in these cases.

The button 10b positioned at the thumb is preferably adapted to generate a signal Sp (t) having a Back or Escape function for the graphic interface 20.

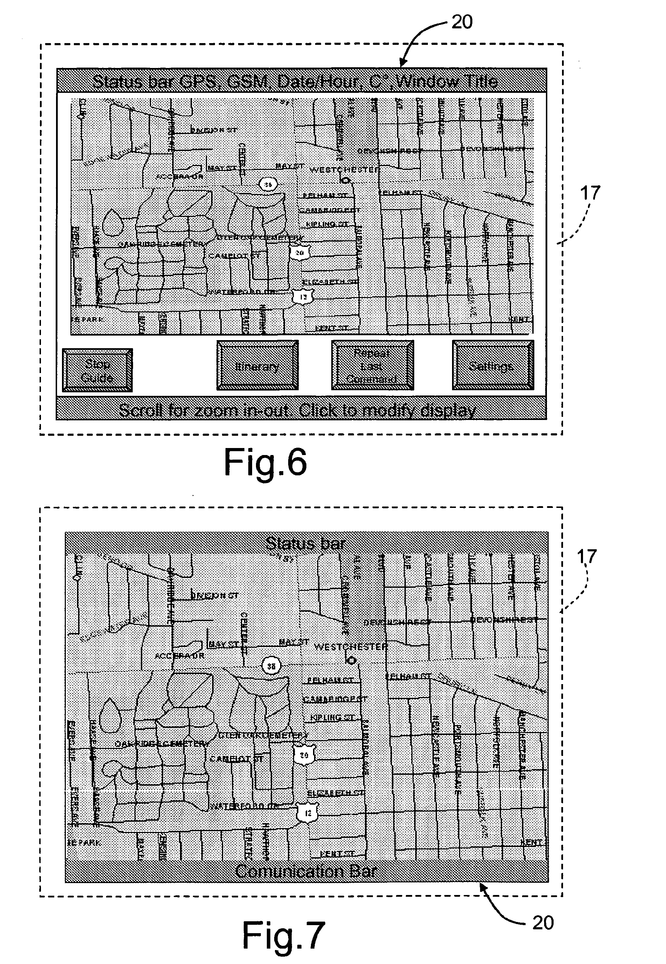

The functions associated with the other buttons 10c, 10d and 10e depend on the running application and are explained in a specific zone (Figure 6) of the graphic interface 20. There are thus provided "soft-buttons", that is buttons whose use depends on the context and whose label is explained on the graphic interface 20.

The scroll ball 10a is preferably used to select menus on the graphic interface 20, for example to shift the selection of a menu to a next menu, the scroll ball 10a is pivoted about a first axis (for example X), while for selecting items from a list present in a selected menu, the scroll ball 10a is pivoted about a second axis (for example, Y).

The interface device 1 is preferably arranged in a storage compartment (not shown) arranged on the central tunnel/armrest (not shown) of the vehicle. It is however clear that various arrangements are possible. After being arranged in the storage compartment, the interface device 1 can recharge its internal battery (not shown); for this purpose, on the lower side of the device 1 is provided an electrical interface (not shown) for powering the recharging circuit. The interface device 1 may also be provided with a microphone 30 arranged within casing 3 and externally communicating through two slots arranged on the upper and lower parts of the device (not shown).

The interface device 1 may be provided with a speaker 33 arranged within casing 3 and externally communicating through such two slots (not shown).

The microphone 30 and the speaker 33 communicate with the interface device 15 which in turn is connected via the Bluetooth™ communication system with the computerised system 17 for using the portable telephone functions and for carrying out the voice functions possibly provided by the interface 20.

The interface device 1 may also be provided with a socket 38 for headset (not shown) communicating with the circuit 15; such headset may be conveniently used by a passenger.

The aforementioned wireless Bluetooth™ connection may be used to allow a connection between the interface 1 and a domestic personal computer (not shown) for editing/loading data present in a memory associated to the circuit 15. The computerised system 17 can access the data present in the concerned memory.

In order to limit the presence of redundant information on the screen, the graphic interface 20 presents two different display modes selectable by the user.

In particular, there is provided a first interactive type display mode (Figure 6) in which the graphic interface 20 presents a first and a second zone (called Interaction Area and Revealing Zone) which are mutually distinct.

The first zone (Interaction Area) shows the graphic information related to the function in use; for example, if a satellite navigator is in use, a road map may be displayed.

The second zone (Revealing Zone) depicts graphic symbols associated to the control organs of the interface 1; for example, the soft-buttons associated to the buttons 10b-10e and the scroll ball/wheel 10a with respective click can be shown.

The graphic symbols shown are arranged so as to create a visual association with the buttons present on the interface 1. The function of the soft-buttons may be described by means of the labels arranged on the buttons. The function of the scroll ball/wheel 10a, with respective click, can be represented by means of a label arranged on the the Revealing Zone base.

In the first display mode, an upper zone, called Status Bar, may also be shown containing status information of general character, such as GSM/GPS field intensity, current time, outside temperature and name of the function currently in use.

The second display mode (Figure 7) essentially presents only the first zone (Interaction Area) thus displaying in full screen the graphic information related to the function in use.

The passage from the first display mode to the second one occurs when the user rests his hand on the device 1; to allow this, it is provided the presence of an optical/pressure sensor which interfaces with the circuit 15 to provide a hand-over signal to the system 17.

## Claims

1. A computerised system (17) and a multi-functional user interface device (1) for a motor vehicle, said multi-functional user interface device (1) operable to control said computerised system (17);
wherein the computerised system (17) is provided with a graphical user interface (20) configured to switch between first and second user-selectable display modes, wherein:
- in the first display mode, graphical information relating to an activated function is displayed in a first area of the graphical user interface (20), and one or more graphical symbols indicative of user-activatable functions associated with the activated function are displayed in a second area of the graphical user interface (20); and
- in the second display mode, graphical information relating to an activated function is displayed in full screen on the graphical user interface (20);
wherein the automotive multifunctional user interface (1) comprises:
• an ergonomically-shaped, hand-held casing (3) configured to be arranged in a user-accessible storage compartment in the motor vehicle;
wherein the casing (3) comprises:
- a substantially flat lower portion (5) configured to rest on a surface of the user-accessible storage compartment,
- an arched upper portion (4) so shaped as to
define, on an external surface, a plurality of lowered, elongated seats (6) configured to receive respective user's fingers,
- an internal battery and a battery recharging circuit designed to recharge the internal battery when the user interface (1) is in the user-accessible storage compartment, and
- a sensor configured to detect a user's hand on the casing (3) and responsively cause the graphical interface (20) of the computerised system (17) to switch between the first and second display modes;
• user-operable control members (10) arranged at respective end portions of the lowered, elongated seats (6) so as to be operable by respective user's fingers to select and activate the user-activatable functions displayed on the graphical user interface (20) of the computerised system (17); wherein the user-operable control members (10) include a rotatable control member (10a) and one or more control buttons (10b, 10c, 10d, 10e) operable to activate the user-activatable functions; and wherein the graphical symbols indicative of the user-activatable functions associated with the activated function are displayed in the second area of the graphical user interface (20) so as to create a visual association with the control button(s) (10b, 10c, 10d, 10e) ;
• an electronic circuit (15) responsive to the control members (10) and the sensor to output control signals for the computerized system (17); and
• a wireless transmission system operable to receive the control signals from the electronic circuit (15) and transmit them to the computerised system (17).

2. The automotive multifunctional user interface device of claim 1, further comprising:
• a sound transducer (30, 33) operable to receive and/or transmit acoustic signals from and/or to a user and to cooperate with the electronic circuit (15) to communicate, via the wireless transmission system, with the computerised system (17) to implement telephone functions and voice functions displayed on the graphical user interface (20).

3. The automotive multifunctional user interface device of claim 2, wherein the sound transducer (30, 33) comprises a microphone (30) and/or a speaker (33).

4. The automotive multifunctional user interface device of any one of the preceding claims, wherein the multifunctional automotive user interface (1) further comprises:
• headset socket (38).

5. The automotive multifunctional user interface device of any one of the preceding claims, wherein the rotatable control member (10a) is either a scroll ball rotatable about two mutually orthogonal axes or a scroll wheel rotatable about a single axis.

6. The automotive multifunctional user interface device of any one of the preceding claims, wherein the sensor comprises an optical sensor or a pressure sensor.

7. The automotive multifunctional user interface device of any one of the preceding claims, wherein one (10b) of the control buttons (10b, 10c, 10d, 10e), preferably the one operable by a user's thumb, is associated with a Back or Escape function for the graphical user interface (20).

## Patentansprüche

1. Computersystem (17) mit einer multifunktionalen Benutzerschnittstelleneinrichtung (1) für ein Kraftfahrzeug, wobei die multifunktionale Benutzerschnittstelleneinrichtung (1) betätigbar ist, um das Computersystem (17) zu steuern;
wobei das Computersystem (17) mit einer graphischen Benutzerschnittstelle (20) versehen ist, die derart konfiguriert ist, dass sie zwischen ersten und zweiten vom Benutzer wählbaren Anzeigemoden umschaltbar ist,
wobei in dem ersten Anzeigemodus graphische Information bezüglich einer aktivierten Funktion in einem ersten Bereich der graphischen Benutzerschnittstelle angezeigt wird und ein oder mehrere graphische Symbole, die vom Benutzer aktivierbare Funktionen angeben, welche der aktivierten Funktion zugeordnet sind, in einem zweiten Bereich der graphischen Benutzerschnittstelle (20) angezeigt werden; und
wobei in dem zweiten Anzeigemodus graphische Information bezüglich einer aktivierten Funktion auf dem gesamten Bildschirm auf der graphischen Benutzerschnittstelle (20) angezeigt wird;
wobei die multifunktionale Benutzerschnittstelleneinrichtung (1) des Kraftfahrzeugs folgendes aufweist:
- ein ergonomisch geformtes, in der Hand zu haltendes Gehäuse (3), das derart konfiguriert ist, dass es in einem für den Benutzer zugänglichen Ablagefach in dem Kraftfahrzeug angeordnet werden kann;
wobei das Gehäuse (3) folgendes aufweist:
-- einen im wesentlichen flachen unteren Bereich (5), der so konfiguriert ist, dass er auf einer Oberfläche des für den Benutzer zugänglichen Ablagefachs ruhen kann,
-- einen gewölbten oberen Bereich (4), der derart geformt ist, dass er auf einer Außenoberfläche eine Vielzahl von abgesenkten, langgestreckten Sitzen (6) bildet, die zur Aufnahme der jeweiligen Finger des Benutzers konfiguriert sind,
-- eine interne Batterie und eine Batterieaufladeschaltung, die so konzipiert sind, dass die interne Batterie wieder aufgeladen wird, wenn sich die Benutzerschnittstelle (1) in dem für den Benutzer zugänglichen Ablagefach befindet, und
-- einen Sensor, der so konfiguriert ist, dass er die Hand eines Benutzers auf dem Gehäuse (3) detektiert und darauf ansprechend dafür sorgt, dass die graphische Benutzerschnittstelle (20) des Computersystems (17) zwischen den ersten und zweiten Anzeigemoden umschaltet;
- vom Benutzer betätigbare Steuerungselemente (10), die an jeweiligen Endbereichen der abgesenkten, langgestreckten Sitze (6) angeordnet sind, so dass sie von den jeweiligen Fingern des Benutzers betätigbar sind, um die vom Benutzer aktivierbaren Funktionen zu wählen und zu aktivieren, die auf der graphischen Benutzerschnittstelle (20) des Computersystems (17) angezeigt werden; wobei die vom Benutzer betätigbaren Steuerungselemente (10) ein drehbares Steuerungselement (10a) und einen oder mehrere Steuerungsknöpfe (10b, 10c, 10d, 10e) aufweisen, die zur Aktivierung der vom Benutzer aktivierbaren Funktionen betätigbar sind; und wobei die graphischen Symbole, welche die vom Benutzer aktivierbaren Funktionen angeben, die der aktivierten Funktion zugeordnet sind, in dem zweiten Bereich der graphischen Benutzerschnittstelle (20) angezeigt werden, um eine visuelle Zuordnung mit den Steuerungsknöpfen (10b, 10c, 10d, 10e) zu erzeugen;
- eine elektronische Schaltung (15), die auf die Steuerungselemente (10) und den Sensor anspricht, um Steuersignale für das Computersystem (17) abzugeben; und
- ein drahtloses Übertragungssystem, das derart betätigbar ist, dass es die Steuersignale von der elektronischen Schaltung (15) empfängt und sie an das Computersystem (17) überträgt.

2. Multifunktionale Benutzerschnittstelleneinrichtung für ein Kraftfahrzeug nach Anspruch 1,
das ferner folgendes aufweist:
- einen Schallwandler (30, 33), der derart betätigbar ist, dass er akustische Signale von einem und/oder zu einem Benutzer empfängt und/oder sendet und dass er mit der elektronischen Schaltung (15) zusammenarbeitet, um über das drahtlose Übertragungssystem mit dem Computersystem (17) zu kommunizieren, um Telefonfunktionen und Sprachfunktionen zu implementieren, die auf der graphischen Benutzerschnittstelle (20) angezeigt werden.

3. Multifunktionale Benutzerschnittstelleneinrichtung für ein Kraftfahrzeug nach Anspruch 2,
wobei der Schallwandler (30, 33) ein Mikrofon (30) und/oder einen Lautsprecher (33) aufweist.

4. Multifunktionale Benutzerschnittstelleneinrichtung für ein Kraftfahrzeug nach einem der vorhergehenden Ansprüche,
wobei die multifunktionale Benutzerschnittstelleneinrichtung für ein Kraftfahrzeug (1) ferner eine Buchse (38) für ein Headset aufweist.

5. Multifunktionale Benutzerschnittstelleneinrichtung für ein Kraftfahrzeug nach einem der vorhergehenden Ansprüche,
wobei das drehbare Steuerungselement (10a) entweder eine Scroll-Kugel, die um zwei orthogonal zueinander stehende Achsen drehbar ist, oder ein Scroll-Rad ist, das um eine einzige Achse drehbar ist.

6. Multifunktionale Benutzerschnittstelleneinrichtung für ein Kraftfahrzeug nach einem der vorhergehenden Ansprüche,
wobei der Sensor einen optischen Sensor oder einen Drucksensor aufweist.

7. Multifunktionale Benutzerschnittstelleneinrichtung für ein Kraftfahrzeug nach einem der vorhergehenden Ansprüche,
wobei der eine Steuerungsknopf (10b) von den Steuerungsknöpfen (10b, 10c, 10d, 10e), vorzugsweise der von dem Daumen eines Benutzers betätigbare Steuerungsknopf, mit einer Rückstell-Funktion oder einer Escape-Funktion für die graphische Benutzerschnittstelle (20) ausgerüstet ist.

## Revendications

1. Système informatisé (17) et dispositif d'interface utilisateur multifonctionnelle (1) pour un véhicule à moteur, ledit dispositif d'interface utilisateur multifonctionnelle (1) étant opérationnel pour commander ledit système informatisé (17) ;
dans lequel le système informatisé (17) est pourvu d'une interface utilisateur graphique (20) configurée pour commuter entre des premier et second modes d'affichage sélectionnables par utilisateur, dans lequel :
- dans le premier mode d'affichage, des informations graphiques relatives à une fonction activée sont affichées dans une première zone de l'interface utilisateur graphique (20), et un ou plusieurs symboles graphiques indicatifs de fonctions activables par utilisateur associées à la fonction activée sont affichés dans une seconde zone de l'interface utilisateur graphique (20) ; et
- dans le second mode d'affichage, des informations graphiques relatives à une fonction activée sont affichées en plein écran sur l'interface utilisateur graphique (20) ;
dans lequel l'interface utilisateur multifonctionnelle automobile (1) comprend :
• un boîtier à main de forme ergonomique (3) configuré pour être agencé dans un compartiment de stockage accessible par utilisateur dans le véhicule à moteur ;
dans lequel le boîtier (3) comprend :
- une portion inférieure sensiblement plate (5) configurée pour reposer sur une surface du compartiment de stockage accessible par utilisateur,
- une portion supérieure arquée (4) formée de façon à définir, sur une surface externe, une pluralité d'assises allongées abaissées (6) configurées pour recevoir les doigts respectifs d'un utilisateur,
- une batterie interne et un circuit de recharge de batterie conçu pour recharger la batterie interne lorsque l'interface utilisateur (1) est dans le compartiment de stockage accessible par utilisateur, et
- un capteur configuré pour détecter la main d'un utilisateur sur le boîtier (3) et amener en réponse l'interface graphique (20) du système informatisé (17) à commuter entre les premier et second modes d'affichage ;
• des organes de commande actionnables par utilisateur (10) agencés au niveau de portions d'extrémité respectives des assises allongées (6) abaissées de façon à être activables par les doigts respectifs d'un utilisateur pour sélectionner et activer les fonctions activables par utilisateur affichées sur l'interface utilisateur graphique (20) du système informatisé (17) ; dans lequel les organes de commande actionnables par utilisateur (10) incluent un organe de commande rotatif (10a) et un ou plusieurs boutons de commande (10b, 10c, 10d, 10e) actionnables pour activer les fonctions activables par utilisateur ; et dans lequel les symboles graphiques indicatifs des fonctions activables par utilisateur associées à la fonction activée sont affichés dans la seconde zone de l'interface utilisateur graphique (20) de façon à créer une association visuelle avec le(s) bouton(s) de commande (10b, 10c, 10d, 10e) ;
• un circuit électronique (15) réactif aux organes de commande (10) et au capteur pour fournir en sortie des signaux de commande pour le système informatisé (17) ; et
• un système de transmission sans fil actionnable pour recevoir les signaux de commande du circuit électronique (15) et les transmettre au système informatisé (17).

2. Dispositif d'interface utilisateur multifonctionnelle automobile selon la revendication 1, comprenant en outre :
• un transducteur sonore (30, 33) actionnable pour recevoir et/ou transmettre des signaux acoustiques à partir de et/ou à un utilisateur et pour coopérer avec le circuit électronique (15) pour communiquer, via le système de transmission sans fil, avec le système informatisé (17) pour implémenter des fonctions de téléphone et des fonctions de voix affichées sur l'interface utilisateur graphique (20).

3. Dispositif d'interface utilisateur multifonctionnelle automobile selon la revendication 2, dans lequel le transducteur sonore (30, 33) comprend en outre un microphone (30) et/ou un haut-parleur (33).

4. Dispositif d'interface utilisateur multifonctionnelle automobile selon l'une quelconque des revendications précédentes, dans lequel l'interface utilisateur automobile multifonctionnelle (1) comprend en outre :
• une prise pour casque (38).

5. Dispositif d'interface utilisateur multifonctionnelle automobile selon l'une quelconque des revendications précédentes, dans lequel l'organe de commande rotatif (10a) est soit une bille de défilement rotative autour de deux axes mutuellement orthogonaux soit une molette de défilement rotative autour d'un seul axe.

6. Dispositif d'interface utilisateur multifonctionnelle automobile selon l'une quelconque des revendications précédentes, dans lequel le capteur comprend un capteur optique ou un capteur de pression.

7. Dispositif d'interface utilisateur multifonctionnelle automobile selon l'une quelconque des revendications précédentes, dans lequel un (10b) des boutons de commande (10b, 10c, 10d, 10e), de préférence celui actionnable par le pouce d'un utilisateur, est associé à une fonction Retour ou Echappement pour l'interface utilisateur graphique (20).
